# Europäisches Patentamt
# European Patent Office
# Office européen des brevets

(19)

(11) Veröffentlichungsnummer: **0 013 875**
**A1**

(12) ## EUROPÄISCHE PATENTANMELDUNG

(21) Anmeldenummer: **80100015.9**

(22) Anmeldetag: **03.01.80**

(51) Int. Cl.³: **G 02 F 1/133,** C 09 J 3/16,
C 08 L 63/02, C 08 G 59/50

(30) Priorität: **22.01.79 DE 2902325**

(43) Veröffentlichungstag der Anmeldung: **06.08.80**
**Patentblatt 80/16**

(84) Benannte Vertragsstaaten: **AT CH FR GB IT**

(71) Anmelder: **SIEMENS AKTIENGESELLSCHAFT Berlin und München, Postfach 22 02 61, D-8000 München 22 (DE)**

(72) Erfinder: **Hussain, Amir, Dr., Bellinzonastrasse 6, D-8000 München 71 (DE)**
Erfinder: **von Stein, Christian, Dipl.-Ing., Reinekestrasse 22, D-8000 München 90 (DE)**
Erfinder: **Schneider, Josef, Fasanenstrasse 20, D-8025 Unterhaching (DE)**
Erfinder: **Hofmann, Horst, Dipl.-Chem., Herzogstandstrasse 12, D-8000 München 90 (DE)**

(54) **Organischer Kleber zur Herstellung von Flüssigkristalldisplays.**

(57) Ein Kleber, der für den Bau von Flüssigkristallzellen geeignet ist, beinhaltet flüssiges Epoxidharz auf Diglycidyläther-Bisphenol-A-Basis mit Epoxidäquivalentgewicht 180–190, Aminhärter Diäthylaminopropylamin, Thixotropiermittel und einen Flexibilisator. Der Klebermischung wird zerkleinerte Glasfaser als Abstandshalter beigemischt.

EP 0 013 875 A1

SIEMENS AKTIENGESELLSCHAFT          Unser Zeichen
Berlin und München                  VPA 79 P 7 0 0 7

Organischer Kleber zur Herstellung von Flüssigkristalldisplays.

Die Erfindung betrifft einen organischen Kleber zur Herstellung von Zellen für Flüssigkristallanzeigevorrichtungen aus zwei zueinander parallelen Trägerplatten,
die aus elektrisch isolierendem Material bestehen, von
denen zumindest eine lichtdurchlässig ist, durch Verkleben der Trägerplatten zur Bildung eines für die Aufnahme von Flüssigkristallmasse geeigneten flächigen
Hohlraumes zwischen den Trägerplatten.

Displayzellen für Flüssigkristalldisplays bestehen vorzugsweise aus zwei parallelen Glasscheiben, die auf ihrer
Innenseite mit elektrisch und physikalisch funktionellen
Schichten (Elektrodenmuster) beschichtet sind und einen
Abstand zueinander haben, der je nach Ausführungsart
zwischen 3 $\mu$m und 20 $\mu$m betragen kann. Die beiden Glasscheiben werden rings um den Rand herum miteinander verbunden, wobei die Verbindungsmasse eine mechanisch feste
Verbindung der beiden Glasplatten darstellen muß und

Wed 1 Plr/19.1.1979

einen dichten Abschluß nach außen gewährleisten soll.

Es ist bekannt (DE-OS 2 707 463) als Verbindungsmittel Glaslot aufzutragen und die so zusammengefügten Trägerplatten zu erhitzen, um eine dichte, physikalisch und chemisch beständige Verbindung zu erhalten. Dieser Prozeß erfordert Temperaturen von 500°C, da das Glaslot aufgeschmolzen werden muß, um im flüssigen Zustand die beiden Glasplatten zu benetzen und zu verbinden. Aufgrund dieser hohen Temperaturen kommt es aber häufig zu Verwerfungen der Platten, das heißt zu hohen Ausschußquoten. Ferner sind solche Fertigungsmethoden dann nicht geeignet, wenn die Trägerplatten im Zuge ihrer Herstellung mit Orientierungsschichten aus organischem Material versehen werden sollen.

Es wurde bereits vorgeschlagen, das Glaslot bei der Herstellung von FK-Displays durch organische Kleber, z. B. Schmelzkleber, zu ersetzen. Diese Technik hat gegenüber der Glaslottechnik den Vorteil, daß die Temperatur für den Verbindungsvorgang sehr stark gesenkt werden kann. Sie hat jedoch den Nachteil, daß organische Kleber im Gegensatz zu Glasloten nicht hermetisch dicht sind.

Ein Kleber, der für den Bau von Flüssigkristallzellen geeignet sein soll, muß im wesentlichen folgende Bedingungen erfüllen:

Er muß die zu verklebenden Glasoberflächen gut benetzen,
er muß elastisch sein, um den Ausdehnungsunterschied bei Temperaturwechseln aufnehmen zu können,
er soll möglichst undurchlässig gegen Wasser und Bestandteile der Atmosphäre sein und
er muß mit dem Flüssigkristall verträglich sein.

0013875

- 3 -    VPA   79 P 7 0 0 7

Der Erfindung liegt die Aufgabe zugrunde, mit möglichst einfachen Mitteln einen organischen Kleber zu schaffen, der diese Bedingungen erfüllt. Ein entsprechender Kleber nach der Erfindung beinhaltet flüssiges Epoxidharz auf Diglycidyläther-Bisphenol-A Basis mit Epoxidäquivalentgewicht 180 - 190, Aminhärter Diäthylaminopropylamin, eine amorphe Kieselsäure mit einer spezifischen Oberfläche von 200 $m^2$/g und einen Flexibilisator auf Polysulfidbasis.

Als flüssiges Epoxidharz kann z. B. Harz X20 der Firma Bayer, als Aminhärter z. B. Härter HY 992 der Firma Ciba Geigy, als Thixotropiermittel z. B. Aerosil 200 der Firma Degussa und als Flexibilisator z. B. Thiokol LP-3 der Firma Thiokol Ges. Verwendung finden.

Das Auftragen des organischen Klebers nach der Erfindung auf die zu verklebenden Trägerplatten kann im Siebdruckverfahren erfolgen. Hierfür eignen sich Siebe mit der Maschenzahl 300 bis 350 sehr gut. Nach dem Auflegen der Gegenscheibe auf die bedruckte Scheibe wird das Scheibenpaar ein bis zwei Stunden beschwert und anschließend ohne die Beschwerung sechs Stunden bei 60°C ausgehärtet.

Der organische Kleber nach der Erfindung setzt sich aus 100 GT Harz und 9 - 10 GT Härter zusammen. Die Mischung kann entsprechend dem gewählten Aufbringungsverfahren mit Thixotropiermittel versetzt werden. Außerdem kann zur Erzielung bestimmter Endeigenschaften auf bekannte Weise flexibilisiert werden.

Der Klebermischung werden vorzugsweise 0,15 GT zerkleinerte Glasfaser pro 100 GT Harz als Abstandshalter beigemischt. Je nach gewünschtem Abstand zwischen den Displayscheiben werden Glasfasern von 5 /um, 7 /um oder 9 /um Durchmesser gewählt.

Das Klebersystem nach der Erfindung erfüllt die angeführten Voraussetzungen in folgender Weise:

Es besitzt auf Glas eine niedrige Grenzflächenspannung, die sich in einem Kontaktwinkel $\leq 29^{\circ}$ ausdrückt.
Es ist durch Zusatz von Polysulfiden flexibilisiert; die Verbindung besteht den geforderten Test von 5 Zyklen von $- 20^{\circ}C \ldots + 80^{\circ}C$.
Flexibilisatoren erhöhen im allgemeinen die Permeabilität von Harzen;
durch die Anwendung von Polysulfiden wird die Wasserdampfdurchlässigkeit gar nicht bzw. nur geringfügig größer.
Die Verträglichkeit mit Flüssigkristallen ist gegeben; eine Messung des Klärpunktes in verklebten Zellen ergab keine Änderung dieses Kennwertes.

Nach einer Weiterbildung der Erfindung kann das Klebergemisch vorteilhaft auch zum Verschließen der Einfüllöffnung angewendet werden. Durch die niedrige Grenzflächenspannung werden nämlich die Verunreinigungen, die durch das Einfüllen des Flüssigkristalls entstanden sind, von der Glasoberfläche verdrängt und es kann ein dichter Verschluß erzielt werden, ohne die Einfüllöffnung reinigen zu müssen.

Der Kleber nach der Erfindung ist nicht auf FK-Displays beschränkt, sondern allgemein zum Verkleben von Glas mit Glas oder anderen Stoffen anwendbar.

3 Patentansprüche

Patentansprüche.

1. Organischer Kleber zur Herstellung von Zellen für Flüssigkristallanzeigevorrichtungen aus zwei zueinander parallelen Trägerplatten, die aus elektrisch isolierendem Material bestehen, von denen zumindest eine lichtdurchlässig ist, durch Verkleben der Trägerplatten zur Bildung eines für die Aufnahme von Flüssigkristallmasse geeigneten flächigen Hohlraumes zwischen den Trägerplatten, d a d u r c h   g e k e n n z e i c h n e t , daß der Kleber flüssiges Epoxidharz auf Diglycidyläther-Bisphenol-A Basis mit Epoxidäquivalentgewicht 180 - 190, Aminhärter Diäthylaminopropylamin, eine amorphe Kieselsäure mit einer spezifischen Oberfläche von 200 $m^2$/g und einen Flexibilisator auf Polysulfidbasis enthält.

2. Kleber nach Anspruch 1, d a d u r c h   g e k e n n - z e i c h n e t , daß sich der Kleber folgendermaßen zusammensetzt:
100 GT Harz, 9 - 10 GT Härter, Thixotropiermittel entsprechend dem gewählten Aufbringungsverfahren und Flexibilisator entsprechend bestimmter Endeigenschaften.

3. Anwendung des Klebers nach den Ansprüchen 1 und 2 zum Verschließen der Einfüllöffnung bei Displayzellen.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CHEMICAL ABSTRACTS, Band 83, Nr. 22, 1. Dezember 1975, Zusammenfassung Nr. 180466b, Seite 68, Columbus, Ohio, US, <br><br> & SU - A - 475 383 (E.V.OROBCHENKO et al.)(30-06-1975 <br><br> * Zusammenfassung * | 1,2 |
| | FR - A - 1 066 235 (B.P.M.) <br> * Zusammenfassung; Seite 1, rechte Spalte * | 1,2 |
| | FR - A - 1 189 524 (RENAULT) . <br> * Zusammenfassung * | 1,2 |
| | CHEMICAL ABSTRACTS, Band 81, Nr. 12, 23. September 1974, Zusammenfassung Nr. 64509C, Seite 40, Columbus, Ohio, US, <br> S. LUNAK et al.: "Liquid thiokols as epoxy resin plasticizers" <br><br> & Plasty Kauc. 1974, 11(1),11-14 <br><br> * Zusammenfassung * | 1,2 |
| | DE - A - 2 000 041 (CIBA) <br> * Ansprüche * | 1,2 |
| A | DE - A - 2 446 658 (HITACHI) <br> * Ansprüche; Seiten 11,12 * | 1-3 |

### KLASSIFIKATION DER ANMELDUNG (Int. Cl.)

G 02 F 1/133
C 09 J 3/16
C 08 L 63/02
C 08 G 59/50

### RECHERCHIERTE SACHGEBIETE (Int. Cl.)

C 08 G 59/50
C 08 L 63/02
C 09 J 3/16
G 02 F 1/133
C 08 G 59/66
      59/56

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-04-1980 | DERAEDT |

EPA form 1503.1   06.78